(19) **Europäisches Patentamt**

**European Patent Office**

**Office européen des brevets**

(11) **EP 1 468 212 B1**

(12) **EUROPEAN PATENT SPECIFICATION**

(45) Date of publication and mention
of the grant of the patent:
**28.06.2006 Bulletin 2006/26**

(51) Int Cl.:
**F16H 63/20** (2006.01)

(21) Application number: **03731714.6**

(22) Date of filing: **24.01.2003**

(86) International application number:
**PCT/EP2003/000723**

(87) International publication number:
**WO 2003/062678 (31.07.2003 Gazette 2003/31)**

(54) **GEARSHIFT APPARATUS FOR MULTI-GEAR TRANSMISSIONS**

GANGSCHALTVORRICHTUNG FÜR MEHRGÄNGIGE GETRIEBE

CHANGEMENT DE VITESSE POUR TRANSMISSIONS A VITESSES MULTIPLES

(84) Designated Contracting States:
**DE FR GB IT SE**

(30) Priority: **25.01.2002 GB 0201658**

(43) Date of publication of application:
**20.10.2004 Bulletin 2004/43**

(73) Proprietor: **Eaton Corporation**
**Cleveland, Ohio 44114-2584 (US)**

(72) Inventors:
• **HEATHCOTE, Ian**
**Staffordshire ST8 6HP (GB)**
• **JACKSON, Graeme, Andrew**
**Westhoughton BL5 3BR (GB)**

(74) Representative: **Rüger, Barthelt & Abel**
**Patentanwälte**
**Webergasse 3**
**73728 Esslingen (DE)**

(56) References cited:
**EP-A- 0 300 843**       **EP-A- 0 737 827**
**DE-C- 922 508**        **US-A- 4 608 877**

## Description

The invention relates to a gearshift mechanism for multi-ratio transmissions.

Multi-ratio transmissions of the type with several shift rails, which are arranged next to each other and support respectively one shift fork for engaging and disengaging gears, are known. Examples are to be taken from US patent No. 4,104,929. The shift rails of such transmissions are seated in an orientation parallel in respect to each other and displaceably longitudinally within the transmission housing. In this case each shift rail has a neutral position and at least one position in which it is moved out of the latter (in gear position). The shift rails have cutouts to be engaged by a shift finger. When all shift rails are in their neutral position, cutouts are aligned with each other, so that the shift finger can be moved transversely in respect to the shift rails through the cutouts, (the cross-gate movement).

EP-A-0737827 discloses the features of the preamble of claim 1 and shows a transmission comprising shift rails and a shift selector element comprising two tongues for engagement with the shift rails. The selector element is fixedly connected to a shaft which is rotatably and axially movable held. The shift rails comprise cut outs which, one at a time, receive one of the tongues of the selector element. The travel path for switching from one shift rail to another is at least as big as the distance between the centers of adjacent shift rails. The larger the shift rails are, the longer is the selecting path.

To actuate individual shift rails, the shift finger is moved into the cutout of a selected shift rail. A subsequent movement of the shift finger in respect to the longitudinal (into gear) direction of the respective shift rail displaces the latter accordingly. By means of this the associated shift clutch is actuated via the shift fork associated with the shift rail. In this case each shift fork is preferably responsible for a pair of gears, for example reverse gear/first gear, or second/third gear. The pairs of gears are arranged in a conventional H-shift pattern or HH-shift pattern at ends of a branch of the shift pattern which are located opposite each other. In this case the change of the shift finger from one shift rail to the other shift rail, i.e. a lateral movement of the shift finger, corresponds to a change in the branches of the shift pattern, for example from two/three to four/five. Thus the path of the shift finger from shift rail to shift rail determines the lateral shifting travel at the shift finger and consequently of a shift lever connected to the shift finger. With transmissions of increased size, which can have increased shift rail distances, long shifting travels can therefore occur.

### Summary of the invention

Based on this, it is the object of the invention to provide a gearshift apparatus, which permits a reduction of the lateral shifting travel (cross-gate travel).

This and other objects are attained by means of the gearshift mechanism according to claim 1.

A gear selection mechanism with three, four or more shift rails has a shift rail selector element for axially moving a selected shift rail. The shift rails are provided with cutouts, which form a course through which the shift rail selector element can move transversely in respect to the shift rails. The shift rail selector element has two tongues, which are arranged parallel with each other and spaced apart from each other. The tongues are located in the shifting course formed by the cutouts. In this case the cutouts in the shift rails are laterally spaced apart from each other in such a way that one of the tongues of the shift rail selector element can only come into engagement with respectively one shift rail. Adjoining cutouts are either arranged so close together that a cutout is placed into the space between the tongues while one of the tongues is in engagement with the other cutout, or that one cutout is located outside of the fork formed by the tongues, while one of the tongues is in engagement with a cutout.

A particular advantage of such an arrangement of the shift rails and their cutouts and of the use of a pair of tongues, i.e. a forked shift rail selector element, lies in that the shift rail selector element can be given a particularly short transverse (cross-gate) travel. Because of this the transmission is given a shift feel and a short shifting path as in a passenger car, even if it is larger than a conventional passenger car transmission. But with a known selection finger the path must be greater in order to reach one of the three or four shift rails.

The gearshift mechanism in accordance with the invention makes possible a clearly reduced lateral shifting travel (cross-gate travel). The reduced travel is an advantage in passenger cars and can give the transmission of a truck a shift travel similar to that of a passenger car. The invention, which basically can be used in all transmissions with several shift rails, is particularly suited for use in medium-size transmissions in a torque range between 1000 and 2000 Nm.

Shortening of shift lever travel is achieved in that the shift rail selector element is provided with two spaced-apart selector tongues, which can be moved transversely through a shifting course constituted by interlocking elements of the shift rail. The interlocking elements are for example cutouts in the shift rails, or in fork-like protrusions thereof. When these cutouts are positioned next to each other, they form the shifting course.

While the first selector tongue engages with one of the two shift rails and the selector tongue serves two adjoining shift rails, which for example, constitute a pair of shift rails, the second selector tongue is engageable with a third shift rail, as well as a fourth shift rail, which can be optionally provided and which then makes a pair with the third shift rail. The distance between the interlocking elements of the shift rails within a pair of shift rails is clearly less than the lateral distance of the two pairs of shift rails from each other.

The gearshift mechanism has at least three shift rails. If required, it can have four shift rails arranged in two pairs (or even more). The principle of the invention can be applied in particular to an arrangement in which all shift rails are arranged next to each other, and the shift rail selector element moves on a straight path laterally in respect to the shift rails for selecting them. Alternatively, the principle of the invention can be applied in connection with shift rails arranged next to each other on a curved line, for example an arc of a circle, in which case the shift rail selector tongue then moves on a path in the shape of an arc of a circle. In both cases a reduction of the travel of the shift rail selector element required for selecting a shift rail is achieved.

A preferred embodiment of a gearshift mechanism has shift rails of rectangular cross section. These permit a particularly short lateral distance and therefore short shift lever travel. This in particular, if the interlocking elements, measured in the first direction (transverse direction) have a width which is less than the width, measured in the same direction, of the respective shift rail. In a preferred embodiment, the width of the interlocking elements is approximately half the width of the shift rails. By means of this a reduction of the shifting travel by almost one third results, compared with gearshift mechanisms of the conventional type.

A blocking device (interlocking assembly) is preferably a part of the gearshift mechanism, which assures that only one shift rail can be moved out of its center neutral position into an engagement position by means of a linear movement. The blocking device has a blocking element (interlocking element), which is preferably formed by a transverse bolt or transverse rib extending transversely in respect to the shift rails. This blocking element follows the transverse movement of the shift rail selector element, and to this end it is fixedly connected with it in respect to the transverse direction (first direction). The blocking element has one or several cutouts, which act together with projections or cutouts formed on the shift rails. For example, the blocking element can extend through a groove formed by cutouts in the shift rails. Only that shift rail, which is aligned with the cutout in the blocking element, can be moved. A mechanical blockage of the gearshift mechanism is caused in this way, so that erroneous simultaneous actuations engagement of two gears can be prevented.

The shift rail selector element can be embodied as a pivot finger with a forked end, or as a slider with two selector tongues (tongues). In the latter instance, the shift rail selector element is preferably seated in a support, which is movable in respect to the shift rails, so that it is displaceable in relation to the longitudinal direction of the shift rails. The support can be resiliently biased in respect to its center position. The center position is preferably a center neutral position. However, it can also be determined differently from this.

Further details of advantageous embodiments of the invention ensue from the dependent claims, the drawings and/or the description.

## Brief Description of the Drawings

Fig. 1 illustrates a transmission in a schematic representation,

Fig. 2 illustrates a gearshift mechanism in a perspective schematic representation,

Fig. 3 illustrates a gearshift mechanism with the reverse gear shift rail selected, in a cross-sectional representation,

Fig. 4 illustrates the gearshift mechanism of Fig. 3 with a second shift rail selected, in a cross-sectional representation,

Fig. 5 illustrates the gearshift mechanism of Figs. 3 and 4 with a third shift rail selected, in a cross-sectional representation,

Fig. 6 illustrates the gearshift mechanism of Figs. 3 to 5 with a fourth shift rail selected, in a cross-sectional representation,

Fig. 7 is a schematic illustration of the geometric relationships between the shift rails and their interlocking elements with the selector tongues of the gearshift selector element in a schematic representation (at a highly abstract level),

Fig. 8 illustrates the embodiment of a shift rail in a schematic and sectional perspective representation,

Fig. 9 illustrates a gear cassette of the gearshift mechanism in accordance with the invention in a perspective representation,

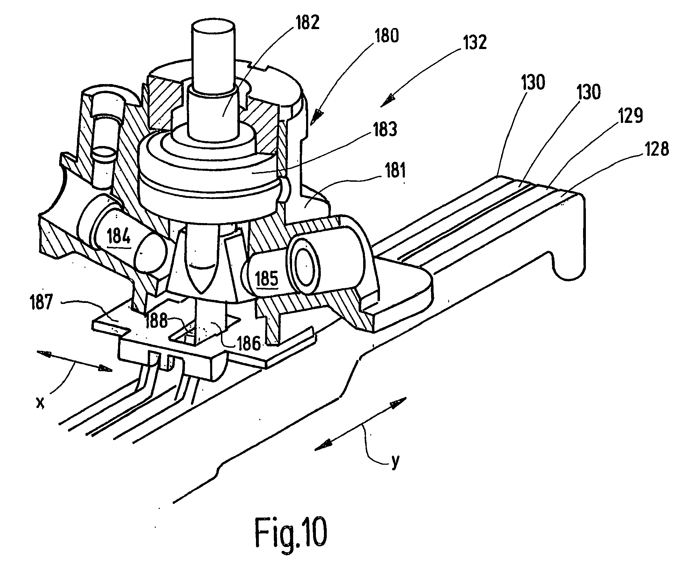

Fig. 10 illustrates a gearshift mechanism with a pivotable shifting finger and four shift rails in a partially sectional perspective representation,

Fig. 11 illustrates the shift rail selector element, which is a part of the gearshift mechanism in accordance with Fig. 10, in a perspective representation.

## Description of Embodiments of the Gearshift Mechanism in Accordance with the Invention:

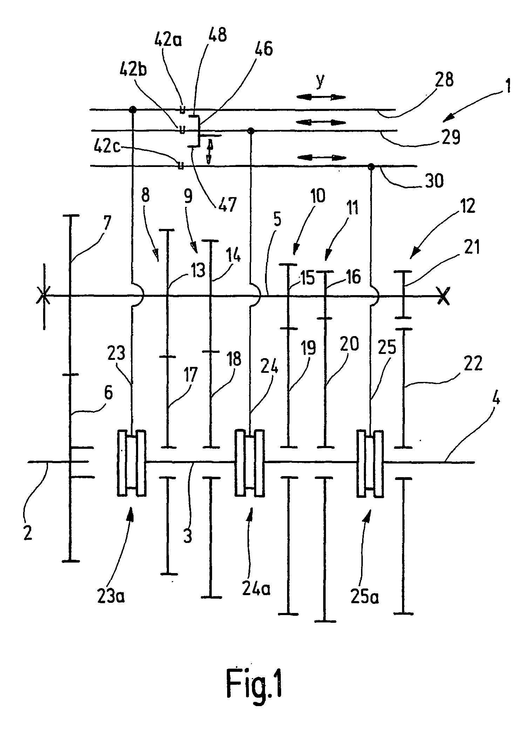

A five-gear manual change gear transmission 1 is illustrated in Fig. 1, which has an input shaft 2, a main shaft 3, an output shaft 4 and a countershaft 5, arranged parallel with the main shaft 3. The shafts are rotatably seated in a transmission housing, not represented in detail. The input shaft 2 has an input gear 6, which is connected, fixed against relative rotation, with the latter and meshes with a counter shaft gear 7, by means of which the countershaft 5 is driven from the direction of the input shaft 2. Further gear wheels form gear wheel pairs 8, 9, 10, 11, with which countershaft gears 13, 14, 15, 16, connected fixed against relative rotation with the countershaft 5, and main shaft gears 17, 18, 19, 20 rotatably seated on the main shaft 3, are respectively associated. With an idler gear, not further illustrated, a further countershaft gear 21 meshes with a further main shaft gear in order to form a gear set 12 for the reverse gear.

To select gears, clutches 23a, 24a, 25a, for example of the jaw clutch type, are provided, which can be of the synchronized type or the non-synchronized type, depending on the requirements. In its center position, the clutch 23a does not provide a coupling connection. If in Fig. 1 it is displaced toward the left, it couples the input shaft 2 with the main shaft 3 and constitutes the direct (fifth) gear. If it is displaced toward the right, it couples the main shaft gear 17 with the main gear, so that the gear wheel pair 8 is activated (transfers torque), so that the fourth gear is selected. Correspondingly, the clutch 24a is used for the selection between the second and third gears, and the clutch 25a for the selection between the first gear and reverse. Thus, the transmission represented provides five forward gears and one reverse gear. If required, further gear wheel pairs can be provided in order to create a seven or a nine gear transmission. Moreover, it is possible to provide front-mounted or rearmounted groups that is auxiliary transmissions of the splitter type, or the range type, or the splitter/range type.

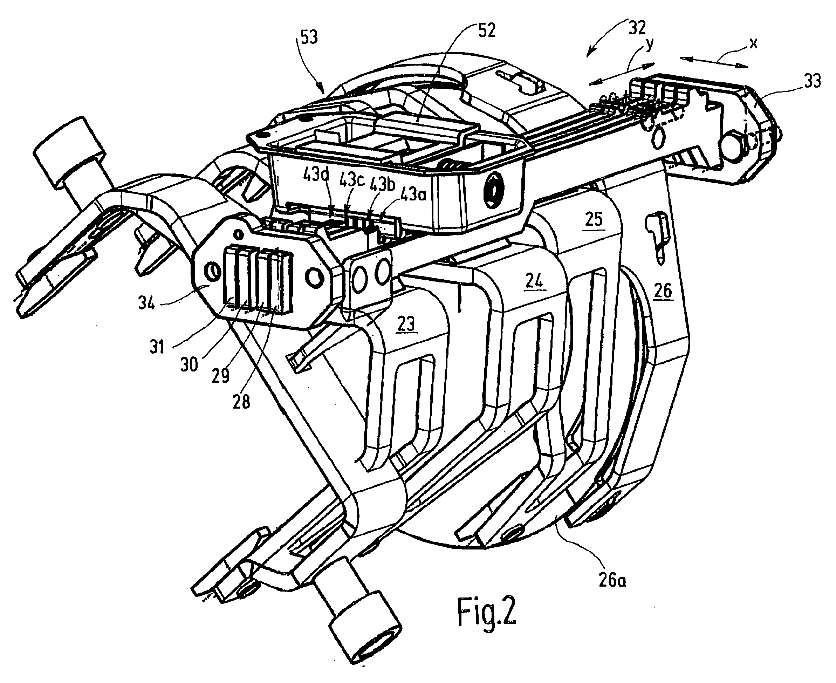

In the present exemplary embodiment, three shift forks 23, 24, 25 are provided, which are supported by the shift rails 28, 29, 30 of a gearshift mechanism 32, and are used for actuating the clutches 23a, 24a, 25a, i.e. to move them from their center neutral position into their left engagement position or into their right engagement position. Such a gearshift mechanism is represented in Fig. 2. The gearshift mechanism 32 in Fig. 2 is intended for a seven or nine gear transmission and has, in addition to the three shift rails 28, 29, 30, a further shift rail 31. Correspondingly, a further shift fork 26 is provided, which is supported by the shift rail 31.

The shift rails 28, 29, 30, 31 have an essentially rectangular cross section and are arranged next to each other in relation to a first direction (X-X direction). Their ends are displaceably seated in bearing blocks 33, 34 in the second direction (Y-Y direction).

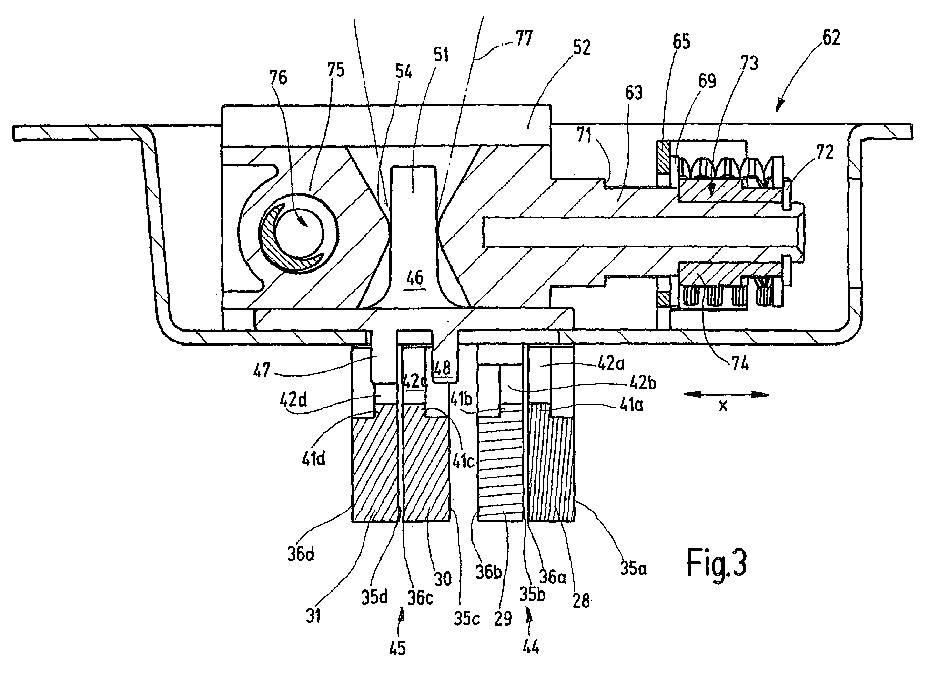

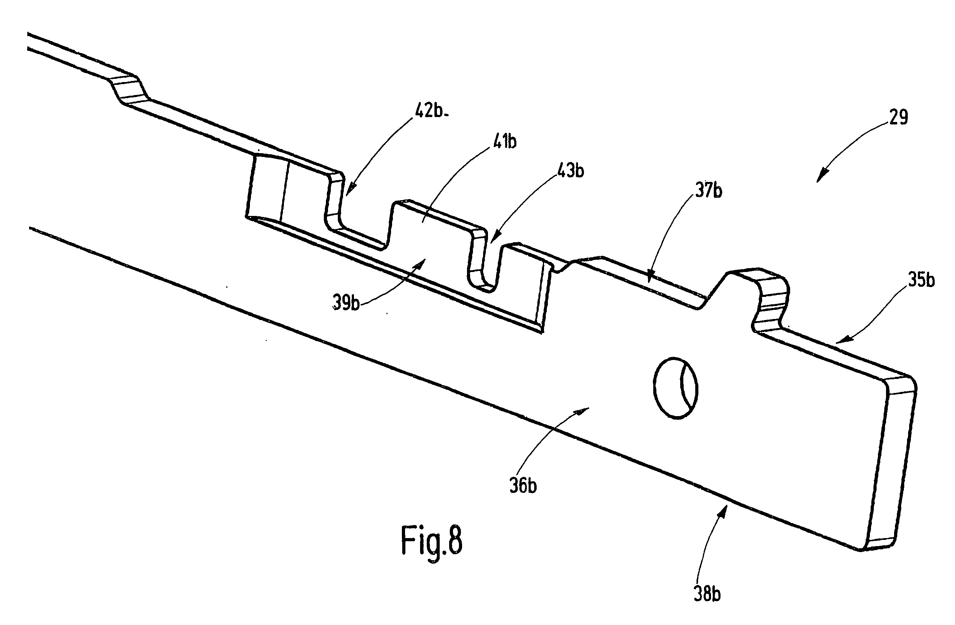

The shift rail 29 has been separately illustrated by way of example in Fig. 8. The shift rail 29 has two flat sides 35b, 36b, which are located opposite each other and point away from each other, which are respectively followed at the top and bottom by narrow sides 37b, 38b. The corresponding flat sides and narrow sides of the shift rails 28, 30 and 31 have the respective letter index a, c, or d (Fig. 3). A trough-like depression 39b extends through the flat side 36b as far as to the narrow side 37b. The shift rail 29 has a narrow wall area 41b in the area of this depression 39b, into which a cutout 42b, used as an interlocking element, and a cutout 43b used for blocking the shift rail, have been cut. Corresponding cutouts 42a, 42c and 42d are provided in the corresponding wall areas 41a, 41c, 41d of the other shift rails 28, 30, 31. This correspondingly applies to the cutouts 43a, 43c and 43d, which have only been indicated in Fig. 2. The narrow sides 38 of the shift rails 28, 29, 30, 31 are arranged on a common plane, so that the cutouts 42a, 42b, 42c, 42d form a shifting course.

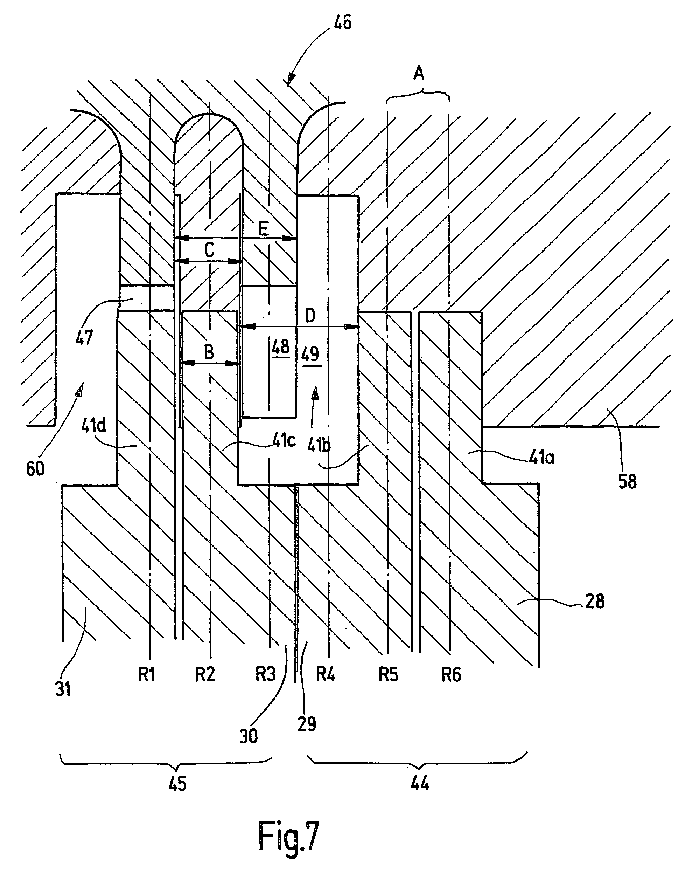

As can be seen in Fig. 3, the shift rails 28, 29, 30, 31 are arranged in pairs, wherein the shift rails 28, 29 are embodied in a mirror-reversed manner and form a first shift rail pair 44. The shift rails 30, 31 are also embodied in a mirror-reversed manner and form a second shift rail pair 45. The shift rails 28, 29, 30, 31 are closely spaced apart within a shift rail pair 44, 45, wherein the shift rail pairs 44, 45 are at a greater distance from each other. This can be seen in Fig. 7. The distance A between the wall centers of two adjoining wall areas 41a, 41b determines a grid dimension which is indicated in Fig. 7 by means of grid lines R1 to R6. The wall areas 41b and 41c are apart from each other by three grid lines (four times the grid distance A), while the wall areas 41c and 41d are only spaced apart by a single distance A. In this way a clear space 49 of a width of twice A remains between the edge areas 41b, 41c.

A shift rail selector element 46 is assigned to the shift rails 28, 29, 30, 31, which has two tongues 47, 48, which are arranged parallel with each other. The latter fit with play into the respective cutout 42a, 42b, 42c, 42d. In the transverse direction, the tongues 47, 48 are of a thickness which approximately matches the thickness of the wall sections 41a, 41b, 41c, 41d, or is slightly less than these. The center distance between the tongues 47, 48 corresponds to double the grid dimension A. Therefore the clear distance between the tongues 47, 48, i.e. the space between them, is slightly wider than each wall 41a, 41b, 41c or 41d. Thus the clear distance is also greater than A. In the embodiment in accordance with Fig. 7, the outer distance, i.e. the distance between the outsides of the tongues 47, 48 which point away from each other, is less than the distance between the two wall areas 41b, 41c, i.e. less than three times A. Therefore no center position, in which its tongues 47, 48 are not in contact with any shift rail, exists for the shift rail selector element 46. If such a center position is desired, in which the shift rail selector element 46 has not selected any shift rail, the distance between the shift rails 29, 30 can be increased by one grid dimension without any other functional losses.

The spacings and dimensions follow the equations:

$$B < C$$

and

$$E < D,$$

wherein

B = wall thickness (Fig. 7)
C = spacing between tongues 47, 48
D = spacing 49
E = thickness of tongue (47 or 48) plus spacing therebetween.

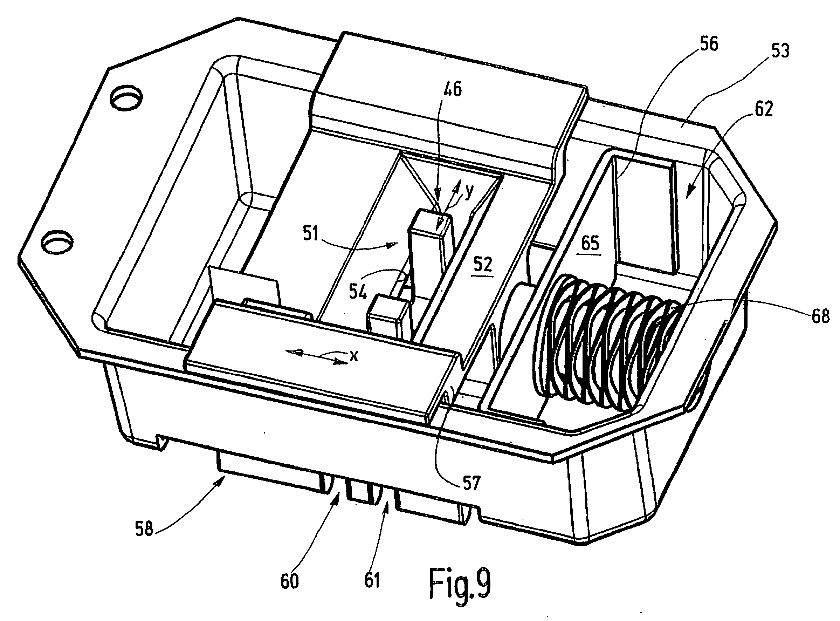

On its top, the shift rail selector element 46 has a forked end 51, represented in Fig. 9, which can be engaged by a conventional shift finger. The shift rail selector element 46 is furthermore seated, displaceable in the Y-Y direction called the second direction, in a support 52 embodied as a carriage. The Y-Y direction corresponds to the longitudinal direction of the shift rails 28, 29, 30, 31.

The support itself is seated in a cassette housing 53 and is displaceable in the X-X direction, i.e. transversely to the shift rails, but cannot be shifted in the X-X direction. The support 52 has a slit 54 used as a guide means, through which the end 51 of the shift rail selector element 46 passes. The support 52 is braced by means of appropriate guide cheeks 56, 57 on the inside of the cassette housing 53, which is approximately rectangular in a view from above.

The support 52 furthermore has a blocking element 58 in the form of a rib extending in the X-X direction. The latter enters into the cutouts 43a, 43b, 43c and 43d of the shift rails 28, 29, 30, 31. Two cutouts 60, 61 have been formed next to each other in the blocking element 58, each of which can release a shift rail. The positions of the cutouts 60, 61 can be seen in Fig. 7. They are respectively two grid distances A wide and are distant from each other by one grid distance A.

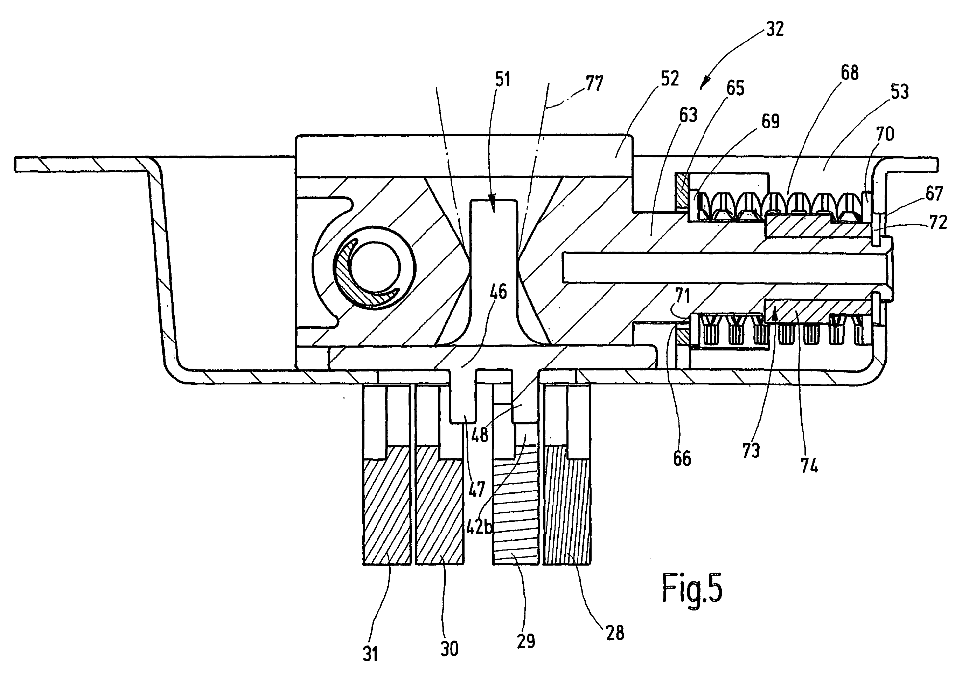

As can be seen in particular in Fig. 9, the support 52 is maintained in a desired initial position, for example a center position, by means of a prestressing device (bias means) 62. Part of the prestressing device 62 is for example a pin 63 (shaft), visible in Fig. 5, which extends away from the support 52 in the X-X direction and is fixedly connected with it. Near an appropriate opening 66, the pin 63 extends through an intermediate wall 65 formed in the cassette housing 53. Furthermore, a further opening 67, aligned with the opening 66, is provided in the housing wall of the cassette housing 53. A pressure spring 68 is seated on the pin 63 and is supported on the one end by means of two end plates 69, 70 (washers) on an annular shoulder 71 of the pin 63, and on the other end by a snap ring 72. Furthermore, the snap ring 72 holds an eye 73 seated on the pin 63, whose exterior diameter matches the interior diameter of the two end plates 69, 70. The eye 73 is connected axially fixed with the pin 63. It has a section 74 of increased diameter, whose diameter is greater than the interior diameter of the pressure plates 69, 70. The distances between the respective fronts of the section 74 and the pressure plate 69, or 70, determine the maximum travel path of the pin 63, and therefore of the support 52, in the X-X direction. In the position of rest, the pressure plates 69, 70 are in stationary contact at the intermediate wall 65 and the cassette housing.

If necessary, the support 52 can be provided with a transverse bore 75, in which a spring-loaded stop mechanism 76 can be provided, for example to establish an obstacle which must be overcome if it is intended to actuate a shift rail assigned to the reverse gear, for example the shift rail 30 (in a three shift rail mechanism) or the shift rail 31 (in a four shift rail mechanism).

The gearshift mechanism 32 operates as follows:

When in operation, a shift finger engages the forked end 51 of the gearshift mechanism 32 which is visible, for example, in Fig. 5. The support 52 has been put into a position of rest by the pressure spring 58, in which the tongue 48 coincides (is in registration with) with the cutout 42b of the shift rail 29. If it is now intended to select the gear which is to be actuated by the shift rail 31, a shift finger 77, which is only shown in dash- dotted outline in Fig. 3 and enters into the slit 54, displaces the support 52, and therefore also the shift rail selector element 46, into the position illustrated in Fig. 3. The tongue 47 comes into engagement with the shift rail 31, while the tongue 48 stays in the space between the shift rails 29, 30. This state is again illustrated in Fig. 7. As can be seen, the cutout 60 of the blocking element 58 here unblocks the shift rail 31 - all other shift rails 28, 29, 30 are blocked. A movement of the shift finger 77 in the Y-Y direction can now move the shift rail 31 in the longitudinal direction in order to engage the desired gear. The position of the support 52 is fixed through the effect of the prestressing device 62. The section 74 of the sleeve 73 is supported on the intermediate wall 65 via the end plate 69 (washer).

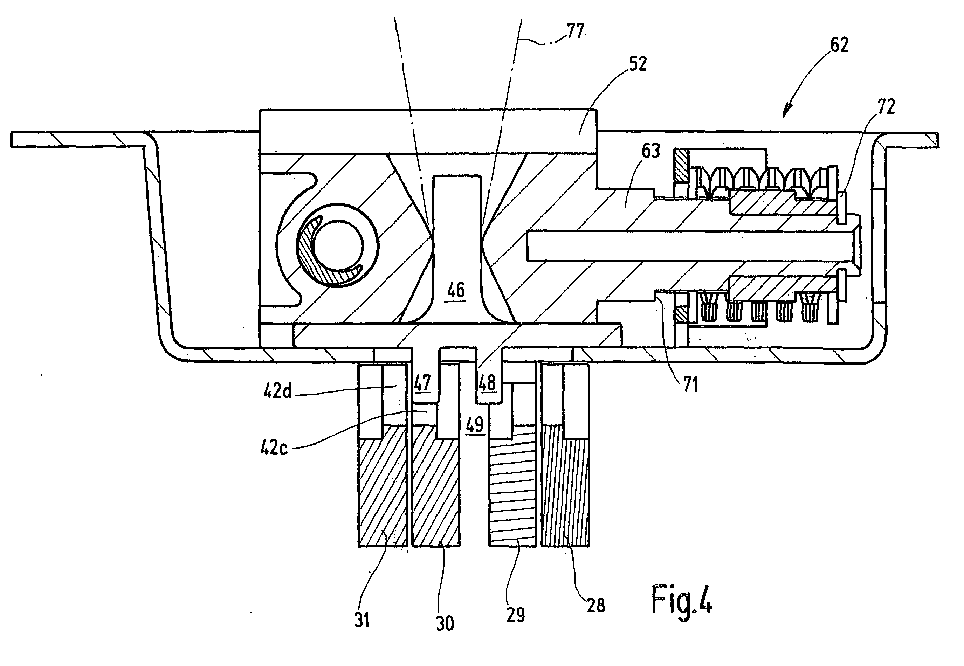

If the shift rail 30 is to be actuated, the shift rail selector element 46 must first be moved in such a way that the shift rail 31 is returned into its neutral position. In this position all cutouts 43a, 43b, 43c, 43d are aligned with each other. The shift rail selector element 46 can therefore be moved in the X-X direction. Its tongue 47 leaves the cutout 42d and enters into the cutout 42c. The tongue 48 continues to remain in the clear space 49. The position taken is illustrated in Fig. 4. Only the shift rail 30 can be displaced, the shift rails 28, 29, 31 are blocked by the blocking element 58. In this state the shift rail 30 can be moved for engaging and disengaging the appropriate gear. The shift rail selector element 46 can be moved further toward the right from this neutral position, in which it is coupled with the shift rail 29 and in which the prestressing device 62 is relaxed.

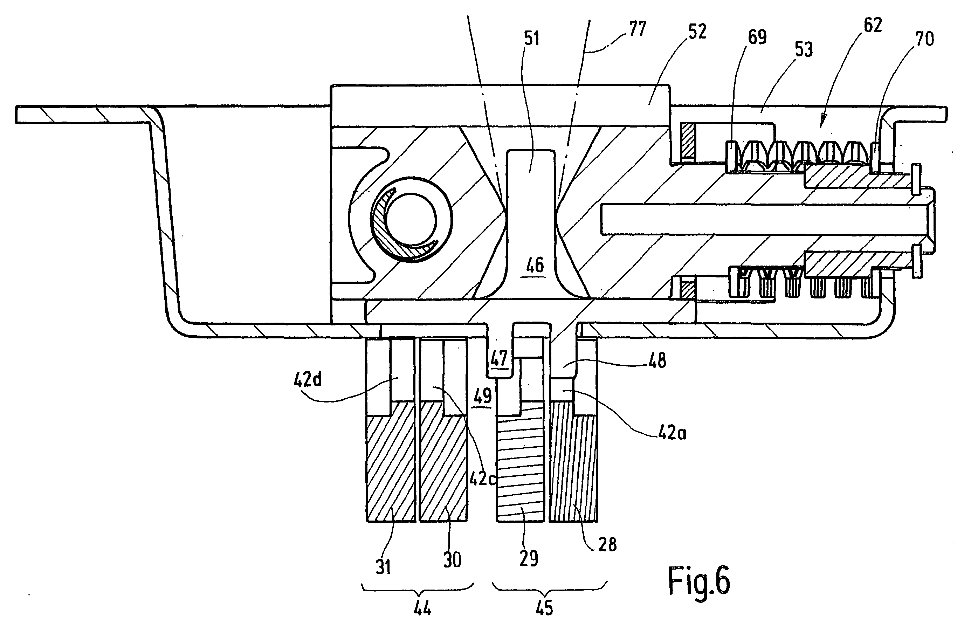

To engage the gears connected with the shift rail 28, the shift rail selector element 46 is moved into the position illustrated in Fig. 6 by means of the shift finger 77, in which the tongue 48 sits in the cutout 42a, while now the tongue 47 is located in the clear space. As can be seen, this takes place against the prestress of the prestressing device 62.

The tongue 47 is assigned to the shift rail pair 44, while the tongue 48 is assigned to the shift rail pair 45. The distance between the shift rail pairs 44, 45 can be arbitrarily increased. However, in the disclosed embodiment it is possible to achieve a particularly short shifting travel in the X-X direction. Its length corresponds to only four grid distances A.

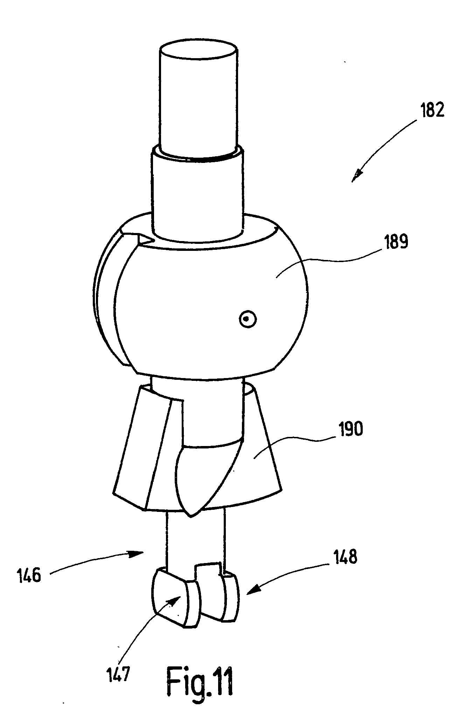

Fig. 11 illustrates a modified embodiment of a gearshift mechanism 132 in accordance with the invention. Part of this are again four shift rails 128, 129, 130, 131, to which a shift tower 180 (shift tower assembly) is assigned. The latter has a housing 181, in which a shift lever 182 is pivotably seated by means of a pivot bearing 183. Pressure elements 184, 185 acting below its pivot center can prestress the shift lever 182 toward its center.

Its lower end 186 passes through a blocking and guide plate 187, which for this purpose has a slit 188 extending in the Y-Y direction. The blocking and guide plate itself is guided in such a way that it is only displaceable in the X-X direction, but not in the Y-Y direction. It can have a blocking element 158 at a location distant from the slit 188, which essentially corresponds to the blocking element 58 in Fig. 7.

The shift lever 182 is separately illustrated in Fig. 12. Below a bearing ball 189 it has a wedge section 190, on which the pressure elements 184, 185 (Fig. 11) act. A shift rail selector element 146 with two tongues 147, 148, which are used as selector tongues for the shift rails 128, 129, 130, is embodied below the wedge section 190. These are embodied corresponding to the shift rail 29 in accordance with Fig. 8. The geometric relationships correspond to those described in connection with Fig. 7.

**Claims**

1. A gearshift mechanism for multi-gear ratio transmissions, the mechanism having:

   a shift rail selector element (46), provided with a first selector tongue (47) and a second selector tongue (48), wherein the selector tongues (47, 48) are maintained at a fixed spaced apart distance from each other,
   a first shift rail (28) which is connected to a first shift fork (23) for engaging and disengaging gear ratios by clutch means (23a), the first shift rail (28), having an interlocking element (42a) for the selective engagement of the second selector tongue (48),
   a second shift rail (29) which is connected to a second shift fork (24) for engaging and disengaging gear ratios by clutch means (24a), the second sift rail (29), having an interlocking element (42b) for the selective engagement of the second selector tongue (48), **characterized in that**
   the shift rails (28, 29) comprise flat sides (36b), a trough-like depression (39b) extends through the flat side (35a, 36b) and
   the shift rails (28, 29) have narrow wall areas (41a, 41b) in the area of this depression (39b) into which a cutout (42a, 42b) used as an interlocking element has been cut.

2. The gearshift mechanism according to claim 1 additionally comprising at least a third shift rail (30) which is connected to a third shift fork (25) for acting on third clutch means (25a), the third shift rail (30), having an interlocking element (42c) for the selective engagement of the first selector tongue (47).

3. The gearshift mechanism according to claim 2, **characterized in that** a first group includes two shift rails and a second group contains at least one shift rail.

4. The gearshift mechanism according to claim 3, **characterized in that** the shift rails are in two groups, each group containing two shift rails.

5. The gearshift mechanism according to claim 1, **characterized in that** each shift rail has engagement regions for engagement with a selector tongue depending from a selector element.

6. The gearshift mechanism according to claim 1, **characterized in that** the distance between the selector tongues (47, 48) is greater than the distance between two adjacent interlocking elements.

7. The gearshift mechanism according to claim 1, **characterized in that** the distance between the selector tongues is smaller than the distance between two spaced apart interlocking elements.

8. The gearshift mechanism according to claim 1, **characterized in that** a plurality of shift rails is provided grouped into pairs of adjacent shift rails, the groups being spaced apart wherein a plurality of selector tongues is provided each of which being individually associated to one of the pairs of the shift rails.

9. The gearshift mechanism according to claim 1, **characterized in that** the selector element is movable in a cross-gate travel direction traversely to the shift rails and in an into gear direction longitudinally to the shift rails.

10. The gearshift mechanism according to claim 1, **characterized in that** all interlocking elements (42a, 42b, 42c, 42d) have a width (A), measured in the first direction (X-X), which is less than the width of the respective shift rail (28, 29, 30, 31) measured in the same direction (X-X).

11. The gearshift mechanism according to claim 10, **characterized in that** the width of each of the interlocking elements (42a, 42b, 42c, 42d) is approximately half the width of each of the shift rails (28, 29, 30, 31).

12. The gearshift mechanism according to claim 1, **characterized in that** the selector tongues (47, 48) of the shift rail selector element (46) are tongues, whose width essentially corresponds to the width of the interlocking elements (42a, 42b, 42c, 42d).

13. The gearshift mechanism according to claim 1, **characterized in that** the shift rail selector element (46) is connected with a blocking element (58), which blocks shift the rails (28, 29, 30, 31) in a center position in relation to the second direction (Y-Y) when both selector tongues (47, 48) of the shift rail selector element (46) are in at least partial engagement with the shift rails (28, 29, 30, 31).

14. The gearshift mechanism according to claim 1, **characterized in that** the shift rail selector element (46) is connected with a blocking element (58), which releases only the one of all the shift rails (28, 29, 30, 31) for movement in the second direction (Y-Y), whose interlocking element is the only one which is in engagement with the selector tongue.

15. The gearshift mechanism according to claim 13 or 14, **characterized in that** the blocking element (58) is arranged on a support (52), which is seated displaceably in the first direction (X-X) and in this direction is connected with the shift rail selector element (46), wherein the shift rail selector element (46) is freely movable relative to the support (52) in the second direction (Y-Y).

16. The gearshift mechanism according to claim 1, **characterized in that** the shift rail selector element (46) is resiliently biased towards its center position by means of at least one spring element (68) at least in the first direction (X-X), in which its selector tongues (47, 48) are not in engagement with the interlocking elements of the shift rails, or in which its selector tongues (47, 48) are in engagement with the interlocking element (42b) of a selected shift rail (29) .

17. The gearshift mechanism according to claim 10, **characterized in that** the support (52) has an extension (63) in the first direction (X-X), which supports a pressure spring (68), which is supported between two driver plates (69, 70), which are stretched by the pressure spring (68) between detents (71, 72) formed on the extension (63), wherein two stationary contact faces (65, 53) are assigned to the pressure spring (68).

18. The gearshift mechanism according to claim 1, **characterized in that** the shift rail selector element (46) is seated, movable in the second direction (Y-Y), on a support (52), which in turn is seated, displaceable in the first direction (X-X), in a housing (53), wherein the shift rail selector element (46) has a means (51) for a connection with a known selector finger (77).

**Patentansprüche**

1. Gangschalteinrichtung für mehrgängige Getriebe, wobei die Einrichtung aufweist:

ein Schaltstangenauswahlelement (46), das mit einer ersten Wählerzunge (47) und einer zweiten Wählerzunge (48) versehen ist, wobei die Wählerzungen (47, 48) zueinander in einem festgelegten Abstand gehalten sind,
mit einer zweiten Schaltstange (28), die mit einer ersten Schaltgabel (23) verbunden ist, die zum Ein- und Ausrücken von Gängen durch Kupplungsmittel (23a) dient, wobei die erste Schaltstange (28) ein Eingriffselement (42a) zum wahlweisen in Eingriff bringen mit der zweiten Wählerzunge (48) aufweist,
mit einer zweiten Schaltstange (29), die mit einer zweiten Schaltgabel (24) zum Ein- und Ausrükken eines Gangs mittels eines Kupplungsmittels (24a) versehen ist, wobei die zweite Schaltstange (29) ein Eingriffselement (42b) zum wahlweisen in Eingriff bringen mit der zweiten Wählerzunge (48) aufweist, **dadurch gekennzeichnet, dass**
die Schaltstangen (28, 29) Flachseiten (36b) aufweisen,
eine trogartige Vertiefung (39b) in die Flachseite (35a, 36b) eingesenkt ist und
die Schaltstangen (28, 29) im Bereich dieser Vertiefung (39b) dünne Wandbereiche (41a, 41b) aufweisen, in die eine Ausnehmung (42a, 42b) eingebracht ist, die als ein Eingriffselement genutzt wird.

2. Gangschalteinrichtung nach Anspruch 1 mit einer zusätzlichen dritten Schaltstange (30), die mit einer dritten Schaltgabel (25) zur Betätigung eines dritten Kupplungsmittels (25a) versehen ist, wobei die dritte Schaltstange (39) ein Eingriffselement (42c) zum wahlweisen in Eingriff bringen mit der ersten Wählerzunge (47) aufweist.

3. Gangschalteinrichtung nach Anspruch 2, **dadurch gekennzeichnet, dass** eine erste Gruppe zwei Schaltstangen und eine zweite Gruppe wenigstens eine Schaltstange umfasst.

4. Gangschalteinrichtung nach Anspruch 3, **dadurch gekennzeichnet, dass** die Schaltstangen in zwei Gruppen eingeteilt sind, wobei jede Gruppe zwei Schaltstangen enthält.

5. Gangschalteinrichtung nach Anspruch 1, **dadurch gekennzeichnet, dass** jede Schaltstange Eingriffsbereiche zum in Eingriff bringen mit einer Wählerzunge aufweist, die sich von einem Wählerelement weg erstreckt.

6. Gangschalteinrichtung nach Anspruch 1, **dadurch gekennzeichnet, dass** der Abstand zwischen den Wählerzungen (47, 48) größer ist als der Anstand zwischen zwei benachbarten Eingriffselementen.

7. Gangschalteinrichtung nach Anspruch 1, **dadurch gekennzeichnet, dass** der Abstand zwischen den Wählerzungen kleiner ist, als der Abstand zwischen zwei voneinander beabstandeten Eingriffselementen.

8. Gangschalteinrichtung nach Anspruch 1, **dadurch gekennzeichnet, dass** eine Anzahl von Schaltstangen vorgesehen ist, die zu Paaren einander benachbarter Schaltstangen geordnet sind, wobei die Gruppen voneinander beabstandet sind, wobei eine Anzahl von Wählerzungen vorgesehen ist, deren jede einem der jeweiligen Paare der Schaltstangen individuell zugeordnet ist.

9. Gangschalteinrichtung nach Anspruch 1, **dadurch gekennzeichnet, dass** das Wählerelement in einer Kulissenquerrichtung quer zu den Schaltstangen und in Gangschaltrichtung längs zu den Schaltstangen beweglich ist.

10. Gangschalteinrichtung nach Anspruch 1, **dadurch gekennzeichnet, dass** alle Eingriffselemente (42a, 42b, 42c, 42d) eine Breite (A), gemessen in der ersten Richtung (X-X) aufweisen, die geringer ist, als die Breite der entsprechenden Schaltstange (28, 29, 30, 31), gemessen in der gleichen Richtung (X-X).

11. Gangschalteinrichtung nach Anspruch 10, **dadurch gekennzeichnet, dass** die Breite der Eingriffselemente (42a, 42b, 42c, 42d) ungefähr der Hälfte der Breite jeder Schaltstange (28, 29, 30, 31) entspricht.

12. Gangschalteinrichtung nach Anspruch 1, **dadurch gekennzeichnet, dass** die Wählerzungen (47, 48) des Schaltstangenwählelementes (46) Zungen sind, deren Breite der Breite der Eingriffselemente (42a, 42b, 42c, 42d) im Wesentlichen entspricht.

13. Gangschalteinrichtung nach Anspruch 1, **dadurch gekennzeichnet, dass** das Schaltstangenwählelement (46) mit einem Sperrelement (58) verbunden ist, das die Schaltstangen (28, 29, 30, 31) in einer Mittelposition in Bezug auf die zweite Richtung (Y-Y) blockiert, wenn beide Wählerzungen (47, 48) des Schaltstangenwählelementes (46) in einem wenigstens teilweisen Eingriff mit den Schaltstangen (28, 29, 30, 31) stehen.

14. Gangschalteinrichtung nach Anspruch 1, **dadurch gekennzeichnet, dass** das Schaltstangenwählelement (46) mit einem Sperrelement (58) verbunden ist, das lediglich diejenige der Schaltstangen (28, 29, 30, 31) zur Bewegung in der zweiten Richtung (Y-Y) freigibt, deren Eingriffselement als einziges mit der Wählerzunge in Eingriff steht.

15. Gangschalteinrichtung nach Anspruch 13 oder 14, **dadurch gekennzeichnet, dass** das Sperrelement (58) an einem Träger (52) angeordnet ist, der in erster Richtung (X-X) verlagerbar gehalten und in dieser Richtung mit dem Schaltstangenwählelement (46) verbunden ist, wobei das Schaltstangenwählelement (46) in Bezug auf den Träger (52) in der zweiten Richtung (Y-Y) frei bewegbar ist.

16. Gangschalteinrichtung nach Anspruch 1, **dadurch gekennzeichnet, dass** das Schaltstangenwählelement (46) mittels wenigstens eines Federelements (68) wenigstens in der ersten Richtung (X-X) auf seine Mittelposition hin vorgespannt ist, in der seine Wählerzungen (47, 48) mit den Eingriffselementen der Schaltstangen nicht in Eingriff stehen oder in der seine Wählerzungen (47, 48) mit dem Eingriffselement (42b) einer ausgewählten Schaltstange (29) in Eingriff stehen.

17. Gangschalteinrichtung nach Anspruch 10, **dadurch gekennzeichnet, dass** der Träger (52) einen Fortsatz (63) in erster Richtung (X-X) aufweist, der eine Druckfeder (68) trägt, die zwischen zwei Antriebsplatten (69, 70) abgestützt ist, die durch die Druckfeder (68) zwischen den an dem Fortsatz (63) ausgebildeten Abstützeinrichtungen (71, 72) voneinander weg gespannt sind, wobei der Druckfeder (68) zwei stationäre Kontaktflächen (65, 53) zugeordnet sind.

18. Gangschalteinrichtung nach Anspruch 1, **dadurch gekennzeichnet, dass** das Schaltstangenwählelement (46) an einem Träger (52) in der zweiten Richtung (Y-Y) beweglich angeordnet ist, der seinerseits in einem Gehäuse (53) in der ersten Richtung (X-X) verlagerbar angeordnet ist, wobei das Schaltstangenwählelement (46) ein Mittel (51) zur Verbindung mit einem bekannten Wählfinger (77) aufweist.

**Revendications**

1. Mécanisme de changement de vitesses pour des transmissions à rapports multiples, le mécanisme ayant :

   un élément de sélection d'axe de prise directe (46), muni d'une première langue de sélecteur (47) et d'une deuxième langue de sélecteur (48), dans lequel les langues de sélecteur (47, 48) sont maintenues à un espace fixe à une distance de part et d'autre l'une de l'autre.
   un premier axe de prise directe (28) qui est connecté à une première fourchette (23) pour engager et désengager les rapports d'engrenage au moyen d'un embrayage (23a), le premier axe de prise directe (28), ayant un élément de verrouillage (42a) pour l'engagement sélectif de la deuxième langue de sélecteur (48).
   un deuxième axe de prise directe (29) qui est connecté à une deuxième fourchette (24) pour engager et désengager les rapports d'engrenage au moyen d'un embrayage (24a), le deuxième axe de prise directe (29), ayant un élément de verrouillage (42b) pour l'engagement sélectif de la deuxième langue de sélecteur (48), **caractérisé en ce que**
   les axes de prise directe (28, 29) comprennent des côtés plats (36b),
   une dépression de type en creux (39b) s'étend à travers le côté plat (35a, 36b) et
   les axes de prise directe (28, 29) ont des aires de paroi étroites (41a, 41b) dans l'aire de cette dépression (39b) dans laquelle une coupe (42a, 42b) utilisée comme élément de verrouillage a été coupée.

2. Mécanisme de changement de vitesses selon la revendication 1, comprenant additionnellement au moins un troisième axe de prise directe (30) qui est connecté à une troisième fourchette (25) pour agir sur le troisième moyen d'embrayage (25a), le troisième axe de prise directe (30), ayant un élément de verrouillage (42c) pour l'engagement sélectif de la première langue de sélecteur (47).

3. Mécanisme de changement de vitesses selon la revendication 2, **caractérisé en ce qu'**un premier groupe comprend deux axes de prise directe et qu'un deuxième groupe contient au moins un axe de prise directe.

4. Mécanisme de changement de vitesses selon la revendication 3, **caractérisé en ce que** les axes de prise directe sont en deux groupes, chaque groupe contenant deux axes de prise directe.

5. Mécanisme de changement de vitesses selon la revendication 1, **caractérisé en ce que** chaque axe de prise directe a des régions d'engagement pour l'engagement avec une langue de sélecteur dépendant d'un élément de sélection.

6. Mécanisme de changement de vitesses selon la revendication 1, **caractérisé en ce que** la distance entre les langues de sélecteur (47, 48) est plus grande que la distance entre deux éléments de verrouillage adjacents.

7. Mécanisme de changement de vitesses selon la revendication 1, **caractérisé en ce que** la distance entre les langues de sélecteur est plus petite que la distance entre deux éléments de verrouillage espacés l'un de l'autre.

8. Mécanisme de changement de vitesses selon la revendication 1, **caractérisé en ce qu'**une pluralité d'axes de prise directe est fournie groupée en paires d'axes de prise directe adjacents, les groupes étant espacés dans lesquels une pluralité de langues de sélecteurs est fournie chacune desquelles étant individuellement associée à une paire des axes de prise directe.

9. Mécanisme de changement de vitesses selon la revendication 1, **caractérisé en ce que** l'élément de sélection est mobile dans une direction de mouvement de traversée de secteur transversalement aux axes de prise directe et dans une direction d'engrenage longitudinalement aux axes de prise directe.

10. Mécanisme de changement de vitesses selon la revendication 1, **caractérisé en ce que** tous les éléments de verrouillage (42a, 42b, 42c, 42d) ont une largeur (A), mesurée dans la première direction (X - X), qui est inférieure à la largeur de l'axe de prise directe respectif (28, 29, 30, 31) mesuré dans la même direction (X - X).

11. Mécanisme de changement de vitesses selon la revendication 10, **caractérisé en ce que** la largeur de chacun des éléments de verrouillage (42a, 42b, 42c, 42d) est approximativement la moitié de la largeur de chacun des axes de prise directe (28, 29, 30, 31).

12. Mécanisme de changement de vitesses selon la revendication 1, **caractérisé en ce que** les langues de sélecteur (47, 48) de l'élément de sélection d'axe de prise directe (46) sont des langues, dont la largeur correspond essentiellement à la largeur des éléments de verrouillage (42a, 42b, 42c, 42d).

13. Mécanisme de changement de vitesses selon la revendication 1, **caractérisé en ce que** l'élément de sélection d'axe de prise directe (46) est connecté avec un élément bloquant (58), qui bloque les axes de prise directe (28, 29, 30, 31) dans une position centrale en relation avec la deuxième direction (Y - Y) lorsque les deux langues de sélecteur (47, 48) de l'élément de sélection d'axe de prise directe (46) sont dans un engagement au moins partiel avec les axes de prise directe (28, 29, 30, 31).

14. Mécanisme de changement de vitesses selon la revendication 1, **caractérisé en ce que** l'élément de sélection d'axe de prise directe (46) est connecté avec un élément bloquant (58), qui libère seulement le un de tous les axes de prise directe (28, 29, 30, 31) pour un mouvement dans la deuxième direction (Y - Y), dont l'élément de verrouillage est le seul qui est en engagement avec la langue de sélecteur.

15. Mécanisme de changement de vitesses selon la revendication 13 ou 14, **caractérisé en ce que** l'élément bloquant (58) est arrangé sur un support (52), qui est assis de façon déplaçable dans la première direction (X - X) et connecté dans cette direction avec l'élément de sélection d'axe de prise directe (46), dans lequel l'élément de sélection d'axe de prise directe (46) est librement mobile par rapport au support (52) dans la deuxième direction (Y - Y).

16. Mécanisme de changement de vitesses selon la revendication 1, **caractérisé en ce que** l'élément de sélection d'axe de prise directe (46) est incliné de façon résiliente vers sa position centrale au moyen d'au moins d'un élément ressort (68) au moins dans la première direction (X - X), dans lequel ses langues de sélecteur (47, 48) ne sont pas en engagement avec les éléments de verrouillage des axes de prise directe, ou dans lequel ses langues de sélecteur (47, 48) sont en engagement avec l'élément de verrouillage (42b) d'un axe de prise directe sélectionné (29) .

17. Mécanisme de changement de vitesses selon la revendication 10, **caractérisé en ce que** le support (52) a une extension (63 dans la première direction (X - X), qui supporte un ressort de pression (68), qui est supporté entre deux plaques conductrices (69, 70), qui sont étirées par le ressort de pression (68) entre des détentes (71, 72) formées sur l'extension (63), dans lequel deux faces de contact fixe (65, 53) sont assignées au ressort de pression (68).

18. Mécanisme de changement de vitesses selon la revendication 1, **caractérisé en ce que** l'élément de sélection d'axe de prise directe (46) est assis, mobile dans la deuxième direction (Y - Y), sur un support (52), qui à son tour est assis, déplaçable dans la première direction (X - X), dans un logement (53), dans lequel l'élément de sélection d'axe de prise directe (46) a un moyen (51) pour une connexion avec un doigt de sélection connu (77).

Fig.1

Fig.2

Fig.3

EP 1 468 212 B1

Fig.4

EP 1 468 212 B1

Fig.5

Fig.6

Fig.7

Fig.8

Fig.9

Fig.10

EP 1 468 212 B1

Fig.11